Europäisches Patentamt

European Patent Office

Office européen des brevets

(11) Veröffentlichungsnummer: **0 413 835 A1**

# (12) EUROPÄISCHE PATENTANMELDUNG

(21) Anmeldenummer: 89114672.2

(22) Anmeldetag: 08.08.89

(51) Int. Cl.5: **B01J 19/00**, G21C 13/00

| | |
|---|---|
| Geänderte Patentansprüche gemäss Regel 86 (2) EPÜ. | (71) Anmelder: **Siemens Aktiengesellschaft Wittelsbacherplatz 2 D-8000 München 2(DE)** |
| (43) Veröffentlichungstag der Anmeldung: **27.02.91 Patentblatt 91/09** | (72) Erfinder: **Stoll, Wolfgang, Prof.Dr. Ameliastrasse 85 D-6450 Hanau(DE)** |
| (84) Benannte Vertragsstaaten: **DE FR GB** | |

(54) Behälter mit einem Reaktionsgefäss für Chemische Reaktionen und Verfahren zum Betreiben dieses Behälters.

(57) Ein für Reaktionen mit toxischen und/oder radioaktiven Reaktionspartnern und/oder Reaktionsprodukten sicherer und zulässiger Behälter hat ein Reaktionsgefäß (2), das innerhalb eines Mantelgefäßes (12) angeordnet und von diesem Mantelgefäß (12) vollständig umschlossen ist; innerhalb dieses Mantelgefäßes (12) wird eine Gasatmosphäre aufrechterhalten.

# BEHÄLTER MIT EINEM REAKTIONSGEFÄSS FÜR CHEMISCHE REAKTIONEN UND VERFAHREN ZUM BETREIBEN DIESES BEHÄLTERS

Die Erfindung betrifft einen Behälter mit einem Reaktionsgefäß für chemische Reaktionen nach dem Oberbegriff des Patentanspruches 1 und ein Verfahren zum Betreiben dieses Behälters.

Ein solcher Behälter ist bereits üblich. Er hat ein Mantelgefäß, das nur einen Teil des Reaktionsgefäßes ringartig umschließt. Das Mantelgefäß wird von einem wärmetransportierenden Medium, z.B. Dampf oder ein Kühlmittel durchflossen.

Der Erfindung liegt die Aufgabe zugrunde, diesen Behälter auch für Reaktionen im Reaktionsgefäß sicher und zulässig zu machen, an denen toxische und/oder radioaktive Reaktionspartner teilnehmen und/oder die zu toxischen und/oder radioaktiven Reaktionsprodukten führen.

Zur Lösung dieser Aufgabe hat ein Behälter der eingans erwähnten Art erfindungsgemäß die Merkmale des kennzeichnenden Teiles des Patentanspruches 1.

In das Mantelgefäß dieses Behälters kann beispielsweise Wasserdampf eingeleitet werden. Bildet sich irgendwo in der Wand des Reaktionsgefäßes ein Leck, so gelangen die toxischen oder radioaktiven Reaktionspartner bzw. Reaktionsprodukte sicher nicht nach außen, sondern in den Wasserdampf. Durch Überwachen des aus dem Mantelgefäß ablaufenden Kondensates kann ein solches Leck am Reaktionsgefäß sofort erkannt und der Behälter außer Betrieb gesetzt werden.

Patentanspruch 2 ist auf eine günstige Weiterbildung des erfindungsgemäßen Gefäßes gerichtet, durch die auch die Zufuhrleitungen zum Reaktionsgefäß abgesichert sind.

Günstig ist, wenn der Behälter entsprechend dem Patentanspruch 3 betrieben wird. Durch Betreiben des Behälters entsprechend Patentanspruch 4 wird verhindert, daß im Falle eines Lecks am Reaktionsgefäß besonders viel toxische oder radioaktive Reaktionspartner bzw. Reaktionsprodukte schlagartig in das Mantelgefäß austreten. Auch wird die Gefahr von Trümmerbruch am Reaktionsgefäß verringert.

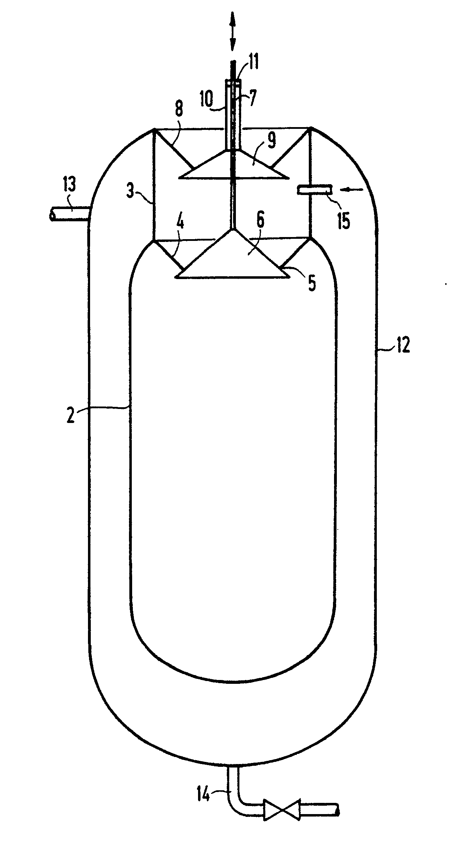

Die Erfindung und Ihre Vorteile seien anhand der Zeichnung an einem Ausführungsbeispiel näher erläutert:

Die Zeichnung zeigt im Längsschnitt einen erfindungsgemäßen Behälter, der zum Auflösen von pulverförmigem Kernbrennstoff in Salpetersäure dient.

Der Behälter nach der Zeichnung weist ein langgestrecktes Reaktionsgefäß 2, z.B. aus Stahl, mit vertikal angeordneter Längsachse auf. Am Oberende ist dieses Reaktionsgefäß 2 mit einer vertikalen Zufuhrleitung 3 versehen, in der sich eine Zufuhrschleuse für das Kernbrennstoffpulver befindet. Diese Zufuhrschleuse weist als erste, unmittelbar am Reaktionsgefäß 2 angeschlossene Verschließvorrichtung einen sich zum Reaktionsgefäß 2 hin verjüngenden kegelstumpfförmigen Dichtungsring 4 auf mit einer zentralen Durchtrittsöffnung 5. In diese Durchtrittsöffnung 5 greift vom Reaktionsgefäß 2 her ein hohler Dichtungskegel 6 mit seiner Kegelspitze, der an dieser Kegelspitze mit einer vertikalen Verschiebungsstange 7 versehen ist.

Vertikal oberhalb der ersten Verschließvorrichtung ist in der Zufuhrleitung 3 eine zweite Verschließvorrichtung der Zufuhrschleuse vorgesehen, die genauso aufgebaut ist wie die erste, also einen sich zum Reaktionsgefäß 2 hin verjüngenden kegelstumpfförmigen Dichtungsring 8 und einen in die zentrale Öffnung dieses Dichtungsringes 8 von der ersten Verschließvorrichtung her mit seiner Lagerspitze greifenden hohlen Dichtungskegel 9 aufweist. An der Kegelspitze dieses Dichtungskegels 9 ist ein Verschiebungsrohr 10 vertikal angebracht, durch das die Verschiebungsstange 7 des Dichtungskegels 6 durch einen Dichtungskörper 11 gasdicht abgedichtet und relativ zum Verschiebungsrohr 10 verschiebbar nach außen geführt ist.

Das Reaktionsgefäß 2 und die erste Verschließvorrichtung der Zufuhrleitung 3 mit dem Dichtungsring 5 und dem Dichtungskegel 6 sind innerhalb eines Mantelgefäßes 12 angeordnet, das das Reaktionsgefäß 2 vollständig umschließt. Die Zufuhrleitung 3 ist durch das Mantelgefäß 12 hindurch zum Reaktionsgefäß 2 geführt. Erst die den Dichtungsring 8 und den Dichtungskegel 9 aufweisende zweite Verschließvorrichtung öffnet nach außen.

Zum Einfüllen von pulverförmigem Kernbrennstoff in das Reaktionsgefäß 2 wird dieser pulverförmige Kernbrennstoff von außen auf den Dichtungsring 8 und den Dichtungskegel 9 der zweiten Verschließvorrichtung aufgeschüttet. Sodann wird der Dichtungskegel 9 durch Verschieben des Verschiebungsrohres 10 abgesenkt, so daß der pulverförmige Kernbrennstoff auf den Dichtungsring 4 und den Dichtungskegel 6 innerhalb der Zufuhrleitung 3 fällt. Der Dichtungskegel 9 wird hierauf durch entgegengesetztes Verschieben des Verschiebungsrohres 10 wieder angehoben und dadurch die zweite Verschließvorrichtung wieder verschlossen. Hierauf wird der Dichtungskegel 6 der ersten Verschließvorrichtung durch Verschieben der Verschiebungsstange 7 gesenkt, so daß der pulverförmige Kernbrennstoff zum Auflösen in die Salpetersäure im Reaktionsgefäß 2 fällt. Hierauf wird auch der Dichtungskegel 6 der ersten Verschließvorrichtung durch entgegengesetztes Verschieben der Verschiebungsstange 7 wieder angehoben und auch die erste Verschließvorrichtung wieder verschlossen.

In das Mantelgefäß 12 wird durch einen Dampfeintrittsstutzen 13 so viel Wasserdampf als druckelastisches Fluid eingeleitet, daß der Dampfdruck im Mantelgefäß 12 mindestens gleich dem Druck innerhalb des Reaktionsgefäßes 2 ist. Seitlich an der Zufuhrleitung 3 kann ein mit einem nicht dargestellten, von außen betätigbaren Ventil verschließbarer Dampfdurchtrittsstutzen 15 vorgesehen sein. Dieser Dampfdurchtrittsstutzen 15 führt vom Mantelgefäß 12 in die Zufuhrleitung 3 zwischen die beiden Verschließvorrichtungen und kann von außen geöffnet werden, wenn die zweite Verschließvorrichtung geschlossen ist und durch Öffnen der ersten Verschließvorrichtung der pulverförmige Kernbrennstoff vom Dichtungsring 4 in das Reaktionsgefäß 2 hinein entladen werden soll.

Das Kondensat des Wasserdampfes im Mantelgefäß 12 wird durch einen ein Ventil aufweisenden Kondensatablaufstutzen 14 am Boden dieses Mantelgefäßes 12 abgezogen. Durch ständige Analyse dieses Kondensates kann überwacht werden, ob sich am Reaktionsgefäß 2 ein Leck gebildet hat.

Das in das Mantelgefäß 12 ein- und hindurchgeleitete Fluid kann auch eine druckelastische Flüssigkeit sein wie z.B. verflüssigtes $CO_2$ oder $NH_3$ oder flüssige Chlorfluorkohlenwasserstoffe. Vom Reaktionsgefäß 2 kann ferner eine nicht dargestellte Rohrleitung zum Zu- und Abführen von Flüssigkeit durch das Mantelgefäß 12 hindurch nach außen geführt sein. Der Querschnitt dieser Rohrleitung ist aber so gering gewählt, daß durch ein plötzlich auftretendes Leck an dieser Rohrleitung nur in unwesentlichem Umfang Kernbrennstoff austreten kann.

## Ansprüche

1. Behälter mit einem Reaktionsgefäß für chemische Reaktionen und mit einem diesem Reaktionsgefäß zugeordneten Mantelgefäß,
**dadurch gekennzeichnet,**
daß das Reaktionsgefäß (2) innerhalb des Mantelgefäßes (12) angeordnet und von diesem Mantelgefäß (12) vollständig umschlossen ist.
2. Behälter nach Anspruch 1,
**dadurch gekennzeichnet,**
daß eine Zufuhrleitung (3) von außen zum Reaktionsgefäß (2) durch das Mantelgefäß (12) hindurchgeführt ist und zwei hintereinander geschaltete Verschließvorrichtungen (5, 6), (8, 9) aufweist, von denen die am Reaktionsgefäß (2) angeschlossene Verschließvorrichtung (5, 6) sich ebenfalls innerhalb des Mantelgefäßes (12) befindet.
3. Verfahren zum Betreiben eines Behälters nach Anspruch 1 oder 2,
**dadurch gekennzeichnet,**
daß innerhalb des Mantelgefäßes (12) eine Auffüllung aus einem druckelastischen Fluid, vorzugsweise eine Gasatmosphäre aufrecht erhalten wird.
4. Verfahren nach Anspruch 3,
**dadurch gekennzeichnet,**
daß die Auffüllung aus druckelastischem Fluid mit einem Druck mindestens gleich dem Innendruck im Reaktionsgefäß (2) aufrechterhalten wird.
5. Verfahren nach Anspruch 3,
**dadurch gekennzeichnet,**
daß als Gasatmosphäre Wasserdampf verwendet wird.

Geänderte Patentansprüche gemäss Regel 86(2) EPÜ.

1. Behälter zum Auflösen von pulverförmigen Kernbrennstoff in Salpetersäure
   - mit einem Reaktionsgefäß (2) für die chemische Reaktion mit der Salpetersäure,
   - mit einem Mantelgefäß (12), in dem das Reaktionsgefäß (2) angeordnet und von dem das Reaktionsgefäß (2) vollständig umschlossen ist,
   - mit einer Zufuhrleitung (3), die von außen zum Reaktionsgefäß (2) durch das Mantelgefäß (12) hindurchgeführt ist und die zwei hintereinander geschaltete Verschließvorrichtungen (4,6;8,9) aufweist, die sich beide innerhalb des Mantelgefäßes (12) befinden,
   - mit einem Dampfeintrittsstutzen (13), über den innerhalb des Mantelgefäßes (12) eine Auffüllung aus einem druckelastischen Fluid, vorzugsweise eine Gasatmosphäre, aufrecht erhaltbar ist mit einem Druck, der mindestens gleich dem Innendruck im Reaktionsgefäß (2) ist,
   - mit einem Kondensatablaufstutzen (14) am Boden des Mantelgefäßes (12) und
   - mit einer Einrichtung zur Analyse des Kondensats, die mit dem Kondensatablaufstutzen (14) in Verbindung steht und ständig überwacht, ob sich am Reaktionsgefäß (2) ein Leck gebildet hat.
2. Behälter nach Anspruch 1, **dadurch gekennzeichnet,** daß als Gasatmosphäre Wasserdampf vorgesehen ist.
3. Behälter nach Anspruch 1 oder 2, **dadurch gekennzeichnet,** daß er stehend angeordnet ist.
4. Behälter nach Anspruch 1, 2 oder 3, **dadurch gekennzeichnet,** daß der Dampfeintrittsstutzen (13) am oberen Bereich des Mantelgefäßes (12) angeordnet ist.
5. Behälter nach einem der Ansprüche 1 bis 4, **dadurch gekennzeichnet,** daß die Verschließvorrichtungen (4,6;8,9) jeweils kegelförmige Elemente (6;9) aufweisen.
6. Behälter nach einem der Ansprüche 1 bis 5, **dadurch gekennzeichnet,** daß ein Dampfdurchtrittsstutzen (15) vorgesehen ist, der an der Zufuhrleitung (3) angeschlossen ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 075 072 (GÖRGENS) <br> * Patentansprüche 1,4,19,25; Figuren 1-5 * <br> --- | 1,3-5 | B 01 J 19/00 <br> G 21 C 13/00 |
| A | DE-A-1 533 881 (VSESOJUZNY NAUCHNO-ISSLEDOVATELSKY I PROEKTNO-KONSTRUKTORSKY INSTITUT METALLURGICHES KOGO MASHINOSTROENIA) <br> * Patentanspruch 1; Figur 1 * <br> ----- | 2 | |
| | | | **RECHERCHIERTE SACHGEBIETE (Int. Cl.5)** <br><br> B 01 J <br> G 21 C <br> G 21 F <br> C 21 B |

Der vorliegende Recherchenbericht wurde für alle Patentansprüche erstellt

| Recherchenort | Abschlußdatum der Recherche | Prüfer |
|---|---|---|
| DEN HAAG | 06-04-1990 | MEERTENS J. |

EPO FORM 1503 03.82 (P0403)